# EUROPEAN PATENT APPLICATION

(11) **EP 4 398 331 A1**
(43) Date of publication of application: **10.07.2024**
(21) Application number: 22864088.4
(22) Date of filing: 20.07.2022
(51) Int. Cl.: H01M 4/131, H01M 4/36, H01M 4/505, H01M 4/525, H01M 4/66, H01M 10/052, H01M 10/0566

(54) **POSITIVE ELECTRODE FOR SECONDARY BATTERIES, AND SECONDARY BATTERY**

(30) Priority: 31.08.2021 JP 2021141538
(71) Applicant: Panasonic Intellectual Property Management Co., Ltd., Kadoma-shi, Osaka 571-0057 (JP)
(72) Inventor: MATSUI, Tooru, Kadoma-shi, Osaka 571-0057 (JP); ASAKA, Keisuke, Kadoma-shi, Osaka 571-0057 (JP); SUZUKI, Hirotetsu, Kadoma-shi, Osaka 571-0057 (JP); SAKATA, Motohiro, Kadoma-shi, Osaka 571-0057 (JP); NAKURA, kensuke, Kadoma-shi, Osaka 571-0057 (JP)
(74) Representative: Novagraaf International SA
(86) International application number: PCT/JP2022/028225
(87) International publication number: WO 2023/032500

(57) **Abstract**

A positive electrode for a secondary battery include a positive electrode current collector 11, and a positive electrode mixture layer provided on a surface of the positive electrode current collector, wherein the positive electrode mixture layer includes a first layer 12A making contact with the positive electrode current collector and a second layer 12B making contact with the first layer. The first layer 12A includes first positive electrode active material particles with a particle diameter L. The second layer 12B includes second positive electrode active material particles with a particle diameter R. The third positive electrode active material particles with a particle diameter r are included at at least an interface between the first layer and the second layer. The first positive electrode active material particles include a lithium transition metal composite oxide with a ratio of Co in metal element atoms other than Li of 2 atom% or more. The second and third positive electrode active material particles include a lithium transition metal composite oxide that does not include Co, or with a ratio of Co in metal element atoms other than Li of less than 2 atom%. The particle diameter of the first to third positive electrode active material particles satisfy R > L > r.

## Description

### [Technical Field]

The present disclosure relates to a positive electrode for a secondary battery and a secondary battery.

### [Background Art]

Secondary batteries, particularly lithium ion secondary batteries, are expected as a power source for small consumer applications, power storage devices, and electric vehicles, because of their high output and high energy density.

Patent Literature 1 proposes, in a positive electrode for a lithium secondary battery including a positive electrode mixture layer including a lithium transition metal composite oxide as a positive electrode active material and a current collecting foil, the positive electrode mixture layer is composed of two or more layers of: a layer having a α-NaFeO₂ structure and including a lithium-rich transition metal composite oxide, wherein the transition metal (Me) includes Co, Ni, and Mn, and the molar ratio Li/Me of lithium (Li) to the transition metal is larger than 1.2, and the molar ratio Mn/Me is Mn/Me ≥ 0.5; and a layer making contact with the current collecting foil, and including a lithium transition metal composite oxide, wherein the transition metal (Me') includes one or more selected from Co, Ni, and Mn, the molar ratio Li/Me' of lithium (Li) to the transition metal is 1.2 or less, and the molar ratio Mn/Me' is 0 ≤ Mn/Me' ≤ 0.4.

### [Citation List]

### [Patent Literature]

[PLT 1]
Japanese Unexamined Patent Publication No. 2015-115244

### [Summary of Invention]

### [Technical Problem]

Recently, in view of suppressing production costs, use of a lithium transition metal composite oxide with a low cobalt (Co) content ratio or a cobalt free lithium transition metal composite oxide not including cobalt, as the positive electrode active material, has been demanded. In particular, a lithium-nickel-manganese composite oxide LiNi₁₋ₓMnₓO₂ (x ≤ 0.2) including Ni and Mn has been expected as promising because of its large charge and discharge capacity.

However, the above-described lithium-nickel-manganese composite oxide has a low electron conductivity compared with conventionally used lithium transition metal composite oxides (e.g., lithium-nickel-cobalt-aluminum composite oxide) including cobalt. Also, current collecting properties are reduced when an impurity layer is present at its surface. In addition, the contact resistance with aluminum foil used as the current collector is high. For these reasons, the lithium-nickel-manganese composite oxide tends to have a high resistance and a large polarization. In addition, with repetitive charge and discharge cycles, expansion and contraction of the active material generate gaps with the aluminum foil, causing increase in the resistance. As a result, in the secondary battery in which a lithium-nickel-manganese composite oxide is used as the positive electrode active material, charge and discharge characteristics tend to decrease.

### [Solution to Problem]

An aspect of the present disclosure relates to a positive electrode for a secondary battery including a positive electrode current collector and a positive electrode mixture layer provided on a surface of the positive electrode current collector, wherein the positive electrode current collector includes Al, the positive electrode mixture layer includes a first layer making contact with the positive electrode current collector, and a second layer making contact with the first layer, the first layer includes first positive electrode active material particles with a particle diameter L, the second layer includes second positive electrode active material particles with a particle diameter R, third positive electrode active material particles with a particle diameter r are included at at least an interface between the first layer and the second layer, the first positive electrode active material particles include a first lithium transition metal composite oxide, a ratio of Co included in the first lithium transition metal composite oxide in metal element atoms other than Li is 2 atom% or more, the second positive electrode active material particles include a second lithium transition metal composite oxide, the second lithium transition metal composite oxide does not include Co, or a ratio of Co in metal element atoms other than Li included in the second lithium transition metal composite oxide is less than 2 atom%, the third positive electrode active material particles include a third lithium transition metal composite oxide, the third lithium transition metal composite oxide does not include Co, or a ratio of Co in metal element atoms other than Li included in the third lithium transition metal composite oxide is less than 2 atom% and R > L > r is satisfied.

Another aspect of the present disclosure relates to a secondary battery including the above-described positive electrode for a secondary battery, a separator, a negative electrode facing the positive electrode with the separator interposed therebetween, and an electrolyte.

### [Advantageous Effects of Invention]

The present disclosure allows for a secondary battery having a high capacity and advantageous for improving charge and discharge characteristics.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

[FIG. 1] FIG. 1 is a cross sectional view schematically illustrating a structure of a positive electrode in an embodiment of the present disclosure.

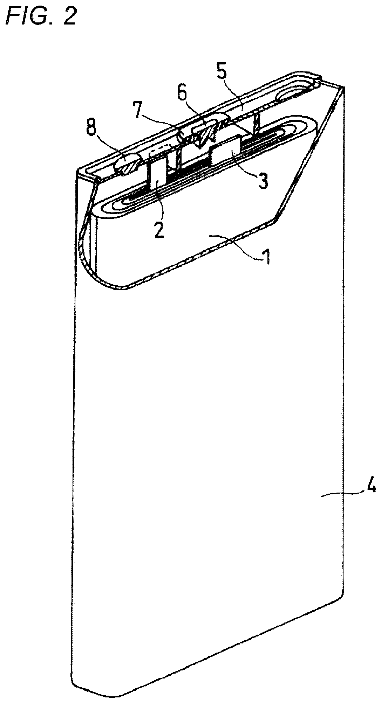

[FIG. 2] FIG. 2 is a partially cutaway schematic oblique view of a secondary battery in an embodiment of the present disclosure.
[FIG. 3A] FIG. 3A is a graph illustrating a charge-discharge curve of a battery of Example 1.
[FIG. 3B] FIG. 3B is a graph illustrating a charge-discharge curve of a battery of Comparative Example 1.
[FIG. 4] FIG. 4 is a graph illustrating changes in a capacity retention rate for every charge and discharge cycle of batteries of Example 1, and Comparative Examples 1 and 2 under conditions where the batteries are charged to an excessively charged state.
[FIG. 5] FIG. 5 is a graph illustrating a charge-discharge curve of a battery of Example 6.

### [Description of Embodiments]

In the following, examples are illustrated for embodiments of the present disclosure, but the present disclosure is not limited to the examples below. In the following description, specific numerical values and materials may be exemplified, but other numerical values and other materials may be used as long as the effect of the present disclosure is obtained. In this specification, "numeral value A to numeral value B" includes the numeral value A and the numeral value B, and can be read as "the numeral value A or more and the numeral value B or less". In the description below, when a lower limit and an upper limit of numeral values relating to specific physical properties and conditions are exemplified, any of the exemplified lower limits and any of the exemplified upper limits can be paired arbitrarily unless the lower limit equals the upper limit or more. When a plurality of materials are given as examples, one of them can be selected and used singly, or two or more can be used in combination.

The present disclosure includes a combination of two or more of the items described in claims arbitrarily selected from the plurality of claims in the appended Claims. That is, as long as there is no technical contradiction, two or more items described in claims arbitrarily selected from the plurality of claims in the appended Claims can be combined.

A positive electrode for a secondary battery of the embodiment of the present disclosure includes a positive electrode current collector and a positive electrode mixture layer provided on a surface of the positive electrode current collector. The positive electrode current collector includes Al, and is composed of a sheet conductive material. The positive electrode current collector is, for example, aluminum foil or an aluminum alloy foil. The positive electrode mixture layer is supported on one or both surfaces of the positive electrode current collector. The positive electrode mixture layer is generally a layer (including a membrane or a film) composed of a positive electrode mixture. The positive electrode mixture includes a positive electrode active material as an essential component.

The positive electrode mixture layer includes a first layer making contact with the positive electrode current collector, and a second layer making contact with the first layer. In other words, on the positive electrode current collector, the first layer, and the second layer are laminated in this order, and the first layer is sandwiched by the positive electrode current collector and the second layer. The first layer includes first positive electrode active material particles with a particle diameter L. The second layer includes second positive electrode active material particles with a particle diameter R. Furthermore, third positive electrode active material particles with a particle diameter r are present at at least an interface between the first layer and the second layer. The third positive electrode active material particles may be included in the second layer.

The particle diameter L of the first positive electrode active material particles, the particle diameter R of the second positive electrode active material particles, and the particle diameter r of the third positive electrode active material particles satisfy a relation R > L > r. The particle diameter L, the particle diameter R, and the particle diameter r are each measured from cross sections in the thickness direction obtained by cutting the positive electrode mixture layer and the positive electrode current collector together as described later.

The first positive electrode active material particles include a first lithium transition metal composite oxide. A ratio of Co in metal element atoms other than Li included in the first lithium transition metal composite oxide is 2 atom% or more. Preferably, the first lithium transition metal composite oxide includes Ni, Co, and Al. Such a first lithium transition metal composite oxide has a high electron conductivity, and excellently adheres to aluminum foil as the positive electrode current collector. Thus, the first layer including the first lithium transition metal composite oxide making contact with the positive electrode current collector improves current collecting properties, which allows for decrease in the resistance between the first layer and the positive electrode current collector. In this manner, polarization in rapid charging decreases, and charge and discharge characteristics improve.

Meanwhile, the first layer is also making contact with the second layer including the second positive electrode active material particles at an opposite side of the positive electrode current collector. The second layer includes a second lithium transition metal composite oxide. The second lithium transition metal composite oxide does not include Co, or a ratio of Co in metal element atoms other than Li included in the second lithium transition metal composite oxide is less than 2 atom%. Such a layer including the second lithium transition metal composite oxide has a large resistance when making direct contact with aluminum foil as the positive electrode current collector. However, with the positive electrode for a secondary battery of this embodiment, the second layer including the second lithium transition metal composite oxide does not directly make contact with the positive electrode current collector, but makes contact with the first layer. Furthermore, the resistance between the first layer and the second layer is low, and polarization is suppressed, and charge and discharge characteristics improve.

At the interface between the first layer and the second layer, at least a portion of the first positive electrode active material particles goes into gaps (depressed portions) between the second positive electrode active material particles, and makes contact with the second positive electrode active material particles, with damaging the impurity layer and the like on the surface of the second positive electrode active material particles. This further improves current collecting properties of the second positive electrode active material particles. At this time, by the particle diameter R of the second positive electrode active material particles being larger than the particle diameter L of the first positive electrode active material particles (R > L), it is considered that a thick conductive path is easily formed, and the resistance between the first layer and the second layer becomes low.

In addition, at the interface between the first layer and the second layer, the third positive electrode active material particles having a particle diameter r that is smaller than the particle diameter L of the first positive electrode active material particles and the particle diameter R of the second positive electrode active material particles may be disposed to fill the gaps between the first positive electrode active material particles and the second positive electrode active material particles. In this manner, adhesion between the first layer and the second layer further improves, the resistance between the first layer and the second layer becomes even lower, and charge and discharge characteristics improve even more.

The third positive electrode active material particles include a third lithium transition metal composite oxide. Similarly to the second lithium transition metal oxide, the third lithium transition metal composite oxide does not include Co, or the ratio of Co in metal element atoms other than Li included in the third lithium transition metal composite oxide is less than 2 atom%. The third lithium transition metal composite oxide may be a composite oxide having the same composition as that of the second lithium transition metal oxide, except for having a different particle diameter, or may be a composite oxide different from the second lithium transition metal oxide.

The third positive electrode active material particles may be included inside the second layer, in addition to the interface between the first layer and the second layer. In this case, the third positive electrode active material particles may be disposed to fill the gaps between the second positive electrode active material particles in the second layer. In this manner, the packing factor of the positive electrode active material particles in the positive electrode mixture layer improves, which allows for a high capacity, and the resistance of the second layer decreases even more, and charge and discharge characteristics improve even more.

Meanwhile, the third positive electrode active material particles may not be included inside the first layer, and the third positive electrode active material particles may not be present at the interface between the positive electrode current collector and the first layer. In this case, the third positive electrode active material particles do not fill the gaps between the first positive electrode active material particles in the first layer, and the electrolyte can be kept in the gaps between the first positive electrode active material particles. In this manner, a high capacity can be kept even at the time of rapid charging and discharging, and rate characteristics improve.

The third positive electrode active material particles are not present at the interface between the positive electrode current collector and the first layer means that, when cross sections of the positive electrode are observed, the third positive electrode active material particles are not present in a space formed between the surface of the positive electrode current collector, one first positive electrode active material particle that is in contact with the surface of the positive electrode current collector, and other first positive electrode active material particle that are adjacent thereto (this particle is also in contact with the positive electrode current collector), or no more than three third positive electrode active material particles are present in the space.

Preferably, the particle diameter r of the third positive electrode active material particles and the particle diameter L of the first positive electrode active material particles satisfy the relation r > 0.155 L. In this case, by satisfying the relation r/L > (2√3-3)/3 (= 1.1547), migration of the third positive electrode active material particles, such that the third positive electrode active material particles at the interface between the first layer and the second layer penetrate into the first layer side through the gaps between the first positive electrode active material particles, is suppressed. Thus, in the gaps between the first positive electrode active material particles in the first layer, a space in which the electrolyte can be kept is formed, which can improve rate characteristics.

The particle diameter L of the first positive electrode active material particles, the particle diameter R of the second positive electrode active material particles, and the particle diameter r of the third positive electrode active material particles are the maximum diameter obtained by observing the cross section in the thickness direction obtained by cutting the positive electrode mixture layer and the positive electrode current collector together and by image processing. The cross sections can be obtained by using a cross section polisher (CP). At that time, a thermosetting resin may be charged into the positive electrode mixture layer to be cured. Here, when the particles are not circular, a diameter (equivalent circle diameter) of a circle having the same area as that of the area (area of particles observed in cross sections of the positive electrode mixture layer) of the cross section of the particles is determined, and the maximum value of the equivalent circle diameter is regarded as the maximum diameter. Ten or more particles are observed, and the maximum diameter is determined.

When the third positive electrode active material particles are included in the second layer with being dispersed throughout the second layer, cross sections of the second layer in the thickness direction include both particles of the second positive electrode active material particles and the third positive electrode active material particles in a mixed state. When the second positive electrode active material particles can be distinguished from the third positive electrode active material particles in the cross sectional images, the maximum diameters are determined respectively for the second positive electrode active material particles and the third positive electrode active material particles, and R and r can be determined. Furthermore, in a distribution of the equivalent circle diameter of the positive electrode active material particles determined by image processing, two peaks appear: a peak of the second positive electrode active material particles, and a peak of the third positive electrode active material particles. The two peaks can be separated in the distribution of the equivalent circle diameter, and the maximum value can be determined respectively from the separated peak of the second positive electrode active material particles and the separated peak of the third positive electrode active material particles to determine Rand r.

When the first positive electrode active material particles, the second positive electrode active material particles, and the third positive electrode active material particles can be separately collected from the positive electrode mixture layer, the D80 diameter (particle size at cumulative volume 80%) in the volume-based particle size distribution of the first positive electrode active material particles, the second positive electrode active material particles, and the third positive electrode active material particles can be determined as L, R, and r, respectively. The volume-based particle size distribution can be measured by a laser diffraction scattering method. For example, "LA-750" manufactured by Horiba Corporation can be used as the measuring device.

When the third positive electrode active material particles are included in the second layer with being dispersed throughout the second layer, in a particle size distribution determined by separately collecting the positive electrode active material particles in the second layer, two peaks appear: a peak of the second positive electrode active material particles, and a peak of the third positive electrode active material particles. In this case, the peak of the second positive electrode active material particles and the peak of the third positive electrode active material particles are separated from the particle size distribution, and the D80 diameter can be determined from each of the peaks in the particle size distribution, and R and r can be determined therefrom.

The particle diameter R of the second positive electrode active material particles may be in the range of, for example, 10 to 30 µm, or in a range of 10 to 25 µm. In contrast, the particle diameter r of the third positive electrode active material particles may be in the range of, for example, 1 to 5 µm.

Examples of the first lithium transition metal composite oxide forming the first positive electrode active material particles include a lithium-nickel-cobalt-manganese composite oxide (in the following, referred to as "composite oxide NCM") including Ni, Co, and Mn, and a lithium-nickel-cobalt-aluminum composite oxide (in the following, referred to as "composite oxide NCA") including Ni, Co, and Al. Examples of the composite oxide NCM include LiNi_{0.5}Co_{0.2}Mn_{0.3}O₂, and LiNi_{1/3}Co_{1/3}Mn_{1/3}O₂. The composite oxide NCA may be a composite oxide represented by Li_{α}Ni_{1-x-y}CoₓAl_{y}O₂ (where 0.95 ≤ α ≤ 1.05, 0.02 ≤ x ≤ 0.1, 0.02 < x + y < 1). In the above-described formula, the value α representing the molar ratio of lithium is a value when discharged until the positive electrode potential is 2.5 V by Li counter electrode basis, and increases and decreases by charge and discharge.

The second lithium transition metal composite oxide composing the second positive electrode active material particles, and the third lithium transition metal composite oxide composing the third positive electrode active material particles may be a lithium-nickel-manganese composite oxide (in the following, referred to as "composite oxide NM") including Ni and Mn. In the second lithium transition metal composite oxide or the third lithium transition metal composite oxide, the ratio of total of Ni and Mn in metal element atoms other than Li included in the composite oxide NM may be 98 atom% or more. The composite oxide NM may be a composite oxide represented by Li_{α}Ni₁₋ₓMnₓO₂ (where 0.95 ≤ α ≤ 1.05, 0 < x ≤ 0.2).

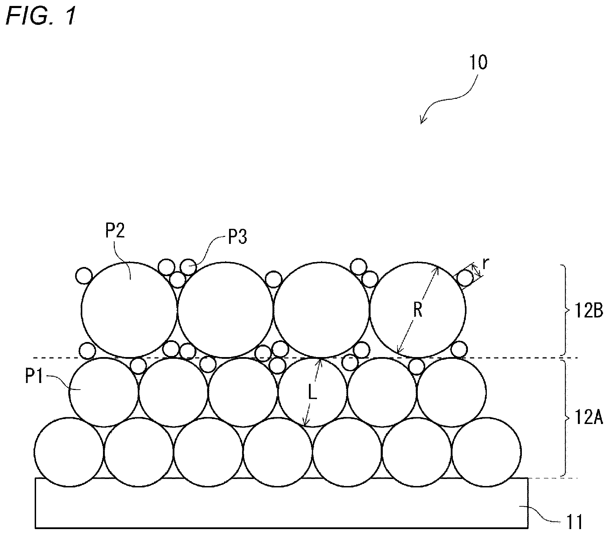

FIG. 1 is a cross sectional view schematically illustrating a structure of a positive electrode for a secondary battery of this embodiment. A positive electrode 10 includes a positive electrode current collector 11, and a positive electrode mixture layer 12 provided on the surface of the positive electrode current collector 11. FIG. 1 shows a part of a cross section in the thickness direction obtained by cutting the positive electrode mixture layer 12 and the positive electrode current collector 11 together. The positive electrode mixture layer 12 may be formed on both of main surfaces of the positive electrode current collector 11. In FIG. 1, a portion of the positive electrode current collector 11 on one main surface side, and a portion of the positive electrode mixture layer 12 formed on the main surface are shown, and the other main surface side of the positive electrode current collector 11 is not shown.

The positive electrode mixture layer 12 includes a first layer 12A contacting the positive electrode current collector 11, and a second layer 12B contacting the first layer 12A at a side facing the positive electrode current collector 11 with the first layer interposed therebetween. The first layer 12A includes first positive electrode active material particles P1. The second layer 12B includes second positive electrode active material particles P2 and third positive electrode active material particles P3. The particle diameter L of the first positive electrode active material particles P1 is smaller than the particle diameter R of the second positive electrode active material particles P2, and larger than the particle diameter of the third positive electrode active material P3 (R > L > r).

The positive electrode current collector 11 is an aluminum foil. Here, the first positive electrode active material particles P1 are a lithium-nickel-cobalt-aluminum composite oxide (composite oxide NCA), and the first positive electrode active material particles P1 are in contact with the positive electrode current collector 11 so that a part thereof enters into the aluminum foil as the positive electrode current collector 11. In this manner, the first positive electrode active material particles P1 make surface contact with the positive electrode current collector 11, which allows for decrease in the resistance between the positive electrode current collector 11 and the first layer 12A.

The third positive electrode active material particles P3 are present at gaps between the first positive electrode active material particles P1 and the second positive electrode active material particles P2 at the interface between the first layer and the second layer, and gaps between the second positive electrode active material particles P2 in the second layer. In this manner, the second positive electrode active material particles P2 are in direct contact with the first positive electrode active material particles P1, and are in contact with the first positive electrode active material particles P1 through the third positive electrode active material particles P3.

Meanwhile, the third positive electrode active material particles P3 are not interposed between the gaps between the first positive electrode active material particles P1 in the first layer. The gaps between the first positive electrode active material particles P1 are filled with the electrolyte. In this manner, rate characteristics can be improved.

In the first layer, when spherical first positive electrode active material particles P1 with a diameter L have a closest packed structure, the diameter of the largest sphere that can be present in a gap formed by three first positive electrode active material particles P1 forming a triangle lattice in the plane is (2√3-3)L/3 (= 0.1547L). Thus, when r > 0.155L, migration of the third positive electrode active material particles P3 present at the interface between the first layer and the second layer, to the positive electrode current collector side through the gaps between the first positive electrode active material particles P1, is suppressed. Thus, in this case, the electrolyte can be kept in the gaps between the first positive electrode active material particles P1, and rate characteristics can be improved.

The second positive electrode active material particles P2 and the third positive electrode active material particles P3 are, here, a lithium-nickel-manganese composite oxide (composite oxide NM). In the second layer, by mixing the second positive electrode active material particles P2 having a large particle diameter and the third positive electrode active material particles P3 having a small particle diameter, the packing density of the positive electrode active material in the second layer can be increased, and the capacity can be increased.

In FIG. 1, a two-layer-structure positive electrode mixture layer 12 with the first layer 12A and the second layer 12B is shown; however, still another positive electrode active material layer may be present on the second layer 12B.

Next, a secondary battery of the embodiment of the present disclosure is described. The secondary battery has, for example, the above-described positive electrode, a separator, and a negative electrode facing the positive electrode with the separator interposed therebetween, and an electrolyte.

### [Positive Electrode]

The positive electrode has a positive electrode current collector and a positive electrode mixture layer formed on a surface of the positive electrode current collector and having a positive electrode active material. The positive electrode active material layer includes the positive electrode active material as an essential component, and may include a binder, a conductive agent, and the like as optional components. For the binder, the conductive agent, and the thickener, known materials can be used.

The positive electrode mixture layer has, as described above, a laminate structure of at least two layers: a first layer making contact with the positive electrode current collector, and a second layer making contact with the first layer. The first layer has a thickness T1 of, for example, 3 to 30 µm. The second layer has a thickness T2 of, for example, 10 to 150 µm. The ratio T1/T2 of the thickness T1 of the first layer relative to the thickness T2 of the second layer is, for example, 0.1 to 1.0.

The first layer includes, as described above, first positive electrode active material particles with a particle diameter L. The second layer includes second positive electrode active material particles with a particle diameter R. The third positive electrode active material particles with a particle diameter r are present at least at an interface between the first layer and the second layer. The third positive electrode active material particles may be disposed so as to be dispersed in the second layer along with the second positive electrode active material particles.

The first layer is formed by a method including a process of, for example, applying a first positive electrode slurry, in which a first positive electrode mixture including first positive electrode active material particles, a binder, and the like is dispersed in a dispersion medium, onto a surface of the positive electrode current collector. The second layer is formed by a method including a process of, for example, applying a second positive electrode slurry, in which a second positive electrode mixture including second positive electrode active material particles, third positive electrode active material particles, a binder, and the like is dispersed in a dispersion medium, onto a surface of the first positive electrode slurry. The dried laminated film may be rolled, if necessary. The first positive electrode slurry and the second positive electrode slurry may be applied onto the positive electrode current collector surface simultaneously using a two-fluid nozzle.

When the second layer includes the second positive electrode active material particles and the third positive electrode active material particles, the ratio of the second positive electrode active material particles relative to the total of the second positive electrode active material particles and the third positive electrode active material particles may be, on mass basis, 50% to 90%, or 65% to 85%.

For the first to third positive electrode active material particles, a lithium transition metal composite oxide having a layered rock salt type crystal structure containing lithium and Ni may be used. However, in each of the first to third positive electrode active material particles, metal elements other than lithium contained in the lithium transition metal composite oxide, and their ratio in the lithium transition metal composite oxide can be changed.

The lithium transition metal composite oxide including nickel is advantageous for a high capacity and low costs. In view of achieving a high capacity, the ratio of Ni in the metal element atoms other than Li included in the lithium transition metal composite oxide is preferably 80 atom % or more. The Ni ratio in the metal element atoms other than Li may be 85 atom % or more, or 90 atom % or more. The Ni ratio in the metal element atoms other than Li is, for example, preferably 95 atom % or less. When the range is to be limited, these upper and lower limits can be combined arbitrarily.

The lithium transition metal composite oxide may include Co, Mn, and/or Al. Co, Mn, and Al contribute to stabilization of the crystal structure of the composite oxide with a high Ni content. However, in view of reduction in production costs, the Co content is preferably low. The composite oxide with a low Co content or not containing Co may include Mn and Al. In view of reduction in production costs, the ratio of Co in the metal element atoms other than Li included in the lithium transition metal composite oxide is preferably kept to less than 2 atom%.

The lithium transition metal composite oxide may be represented by, for example, a general formula: Li_{α}Ni_{1-x1-x2-y-z}Coₓ₁Mnₓ₂Al_{y}Me_{z}O_{2+β}. In the general formula, 0.95 ≤ α ≤ 1.05, 0 ≤ x1 ≤ 0.1, 0 ≤ x2 ≤ 0.5, 0 ≤ y ≤ 0.1, 0 ≤ z ≤ 0.1, 0.5 ≤ 1-x1-x2-y-z and -0.05 ≤ β ≤ 0.05 are satisfied, and Me is an element other than Li, Ni, Mn, Al, Co, and oxygen. The value α representing the molar ratio of lithium is a value when charged until the positive electrode potential is 2.5 V by Li counter electrode basis, and increases and decreases by charge and discharge.

For Me, in view of stabilizing the crystal structure of the composite oxide N, at least one selected from the group consisting of Nb, Zr, B, Mg, Fe, Cu, Zn, Sn, Na, K, Ba, Sr, Ca, W, Mo, Si, Ti, Fe, and Cr can be used.

In the above-described lithium transition metal composite oxides, for the first lithium transition metal composite oxide used as the first positive electrode active material particles, a lithium-nickel-cobalt-aluminum composite oxide (composite oxide NCA) represented by Li_{α}Ni_{1-x-y}CoₓAl_{y}O₂ (where 0.02 ≤ x ≤ 0.1, 0.02 < x + y < 1) can be used. The composite oxide NCA contains a relatively large amount of Co, but has a high electron conductivity, and has excellent adherence with the positive electrode current collector, and therefore can reduce contact resistance. Meanwhile, by making the ratio of the thickness of the first layer relative to the thickness of the positive electrode mixture layer small, the increase in the production costs by containing Co can be suppressed to minimum.

Meanwhile, for the second and the third positive electrode active material particles, by keeping the ratio of Co in the metal element atoms other than Li to less than 2 atom%, the production costs can be reduced. In the above-described lithium transition metal composite oxide, for the second lithium transition metal composite oxide used for the second positive electrode active material particles or the third lithium transition metal composite oxide used for the third positive electrode active material particles, a lithium-manganese composite oxide (composite oxide NM) represented by Li_{α}Ni₁₋ₓMnₓ (where 0 < x ≤ 0.2) can be used. By allowing the positive electrode mixture layer to include two layers of the first layer including the composite oxide NCA and a layer including composite oxide NM, a high capacity can be achieved while suppressing the increase in the resistance in the positive electrode.

The shape and the thickness of the positive electrode current collector may be, for example, 5 µm or more and 20 µm or less. Examples of the material of the positive electrode current collector may be stainless steel, aluminum, an aluminum alloy, and titanium.

### [Negative Electrode]

The negative electrode includes, for example, a negative electrode current collector, and a negative electrode active material layer formed on the surface of the negative electrode current collector. The negative electrode active material layer can be formed, for example, by applying a negative electrode slurry in which a negative electrode mixture including the negative electrode active material, binder, and the like is dispersed in a dispersion medium on a surface of the negative electrode current collector and drying the slurry. The dried film may be rolled, if necessary. That is, the negative electrode active material layer can be a negative electrode mixture layer. A lithium metal foil or a lithium alloy foil may be attached to the negative electrode current collector as the negative electrode active material layer. The negative electrode active material layer may be formed on one surface of the negative electrode current collector, or may be formed on both surfaces thereof.

The negative electrode active material layer includes a negative electrode active material as an essential component, and as an optional component, a binder, a conductive agent, a thickener, and the like can be included. For the binder, the conductive agent, and the thickener, known materials can be used.

The negative electrode active material contains a material that electrochemically stores and releases lithium ions, a lithium metal, a lithium alloy, or the like. For the material that electrochemically stores and releases lithium ions, a carbon material, an alloy, and the like are used. Examples of the carbon material include graphite, graphitizable carbon (soft carbon), non-graphitizable carbon (hard carbon), and the like. Preferred among them is graphite, which is excellent in stability during charging and discharging and has a small irreversible capacity. For the alloy based material, a material containing at least one metal that forms an alloy with lithium can be used, and examples thereof include silicon, tin, a silicon alloy, a tin alloy, and a silicon compound. Silicon oxides or tin oxides of these bonded with oxygen can be used.

For the alloy based material containing silicon, for example, a silicon composite material in which a lithium ion conductive phase and silicon particles dispersed in the lithium ion conductive phase can be used. As the lithium ion conductive phase, for example, a silicon oxide phase, a silicate phase, a carbon phase, or the like can be used. A main component (e.g., 95 to 100 mass%) of the silicon oxide phase can be silicon dioxide. Among these, a composite material composed of a silicate phase and silicon particles dispersed in the silicate phase is preferable because it has a high capacity and a small irreversible capacity. In particular, the silicate phase containing lithium (hereinafter also referred to as a lithium silicate phase) is preferable because of its small irreversible capacity and high initial charge and discharge efficiency.

The lithium silicate phase may be any oxide phase containing lithium (Li), silicon (Si), and oxygen (O), and may include other elements. The atomic ratio O/Si of O to Si in the lithium silicate phase is, for example, larger than 2 and less than 4. Preferably, O/Si is larger than 2 and less than 3. The atomic ratio Li/Si of Li to Si in the lithium silicate phase is, for example, larger than 0 and less than 4. The lithium silicate phase may have a composition represented by the formula Li_{2z}SiO_{2+z} (0 < z < 2). Preferably, the relation 0 < z < 1 is satisfied, and z=1/2 is more preferable. Examples of the elements other than Li, Si, and O that can be contained in the lithium silicate phase include iron (Fe), chromium (Cr), nickel (Ni), manganese (Mn), copper (Cu), molybdenum (Mo), zinc (Zn), aluminum (Al), etc.

The carbon phase may be composed of, for example, an amorphous carbon with less crystallinity. The amorphous carbon may be, for example, hard carbon, soft carbon, or something else.

For the negative electrode current collector, a non-porous conductive substrate (metal foil, etc.), or a porous conductive substrate (mesh-body, net-body, punched sheet, etc.) is used. For the material of the negative electrode current collector, stainless steel, nickel, a nickel alloy, copper, and a copper alloy can be used.

### [Electrolyte]

The electrolyte includes a solvent and a solute dissolved in the solvent. The solute is an electrolytic salt that goes through ion dissociation in electrolytes. The solute may include, for example, a lithium salt. The component of the electrolyte other than the solvent and solute is additives. The electrolyte may contain various additives.

For the solvent, an aqueous solvent or a nonaqueous solvent is used. For the nonaqueous solvent, for example, cyclic carbonates, chain carbonates, cyclic carboxylates, chain carboxylates, etc. are used. Examples of the cyclic carbonates include propylene carbonate (PC), ethylene carbonate (EC), and vinylene carbonate (VC). Examples of the chain carbonates include diethyl carbonate (DEC), ethyl methyl carbonate (EMC), and dimethyl carbonate (DMC). Examples of the cyclic carboxylates include γ-butyrolactone (GBL) and γ-valerolactone (GVL). Examples of the chain carboxylates include methyl acetate, ethyl acetate, propyl acetate, methyl propionate (MP), ethyl propionate (EP), and the like. The nonaqueous solvent may be used singly, or two or more kinds thereof may be used in combination.

Examples of the lithium salt include, a lithium salt of chlorine containing acid (LiClO₄, LiAlCl₄, LiB₁₀Cl₁₀, etc.), a lithium salt of fluorine containing acid (LiPF₆, LiPF₂O₂, LiBF₄, LiSbF₆, LiAsF₆, LiCF₃SO₃, LiCF₃CO₂, etc.), a lithium salt of fluorine containing acid imide (LiN(FSO₂)₂, LiN(CF₃SO₂)₂, LiN(CF₃SO₂)(C₄F₉SO₂), LiN(C₂F₅SO₂)₂, etc.), a lithium halide (LiCl, LiBr, LiI, etc.) and the like. The lithium salt may be used singly, or two or more kinds thereof may be used in combination.

The electrolyte may have a lithium salt concentration of 1 mol/liter or more and 2 mol/liter or less, or 1 mol/liter or more and 1.5 mol/liter or less. By adjusting the lithium salt concentration to be within the above-described range, an electrolyte with excellent ion conductivity and suitable viscosity can be produced. However, the lithium salt concentration is not limited to the above-described range.

### [Separator]

It is desirable to interpose a separator between the positive electrode and the negative electrode. The separator is excellent in ion permeability and has suitable mechanical strength and electrically insulating properties. For the separator, a microporous thin film, a woven fabric, and a nonwoven fabric can be used. For the material of the separator, a polyolefin such as polypropylene or polyethylene is preferred.

In an example structure of the secondary battery, an electrode group and an electrolyte are accommodated in an outer package, and the electrode group has a positive electrode and a negative electrode wound with a separator interposed therebetween. However, the structure is not limited thereto, and other forms of electrode groups may be used. For example, it can be a laminate electrode group, in which a positive electrode and a negative electrode are laminated with a separator interposed therebetween. The batteries may be of any form, for example, a cylindrical type, a prismatic type, a coin type, a button type, a laminated type, etc.

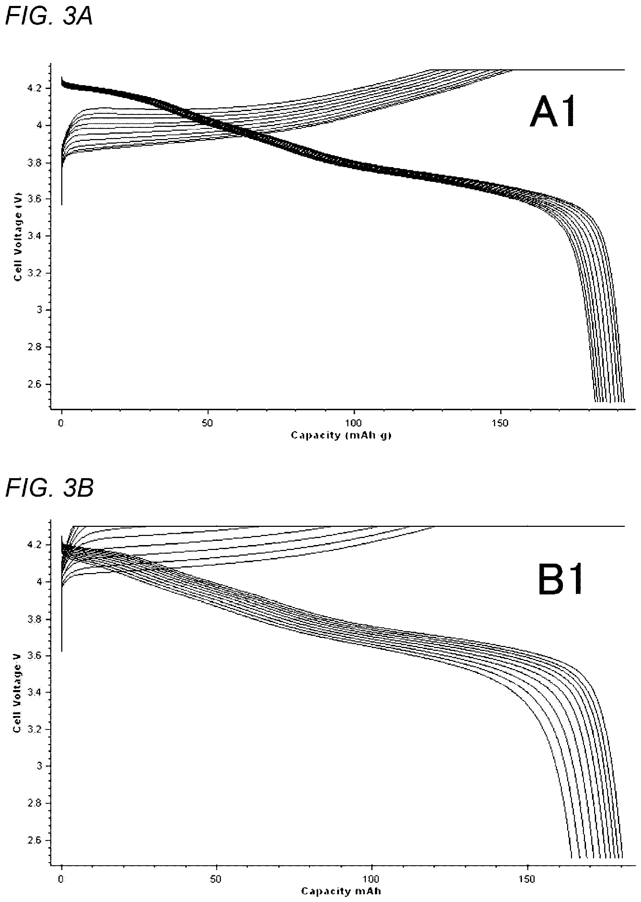

In the following, a structure of a prismatic nonaqueous secondary battery is described with reference to FIG. 3 as an example of the secondary battery of the present disclosure.

The battery includes a bottomed rectangular battery case 4 and an electrode group 1 and an electrolyte (not shown) accommodated in the battery case 4. The electrode group 1 has a negative electrode in the form of a long strip, a positive electrode in the form of a long strip, and a separator interposed therebetween. A negative electrode current collector of the negative electrode is electrically connected to a negative electrode terminal 6 provided in a sealing plate 5 through a negative electrode lead 3. The negative electrode terminal 6 is insulated from the sealing plate 5 with a resin-made gasket 7. A positive electrode current collector of the positive electrode is electrically connected to a rear face of the sealing plate 5 through a positive electrode lead 2. That is, the positive electrode is electrically connected to the battery case 4 also serving as a positive electrode terminal. The periphery of the sealing plate 5 is fitted to the open end of the battery case 4, and the fitting portion is laser welded. The sealing plate 5 has an injection port for a nonaqueous electrolyte, and is sealed with a sealing plug 8 after injection.

The present disclosure will be described in detail below with reference to Examples and Comparative Examples. The present disclosure, however, is not limited to the following Examples.

### <Example 1>

### [Positive Electrode Production]

For the first positive electrode active material particles, a lithium-cobalt-aluminum composite oxide (LiNi_{0.91}Co_{0.05}Al_{0.04}O₂) was prepared. The first positive electrode active material particles had a particle diameter L of 6 µm, measured by the laser diffraction scattering method as a D80 diameter in a volume-based particle size distribution.

For the second positive electrode active material particles and the third positive electrode active material particles, lithium-nickel-manganese composite oxides having different average particle diameters (LiNi_{0.8}Mn_{0.2}O₂) were prepared. The second and third positive electrode active material particles had a particle diameter R and a particle diameter r of 15 µm and 1 µm, respectively, as a D80 diameter in a volume-based particle size distribution measured by a laser diffraction scattering method.

98 parts by mass of the first positive electrode active material particles, 1 part by mass of acetylene black (AB), 1 part by mass of polyvinylidene fluoride (PVDF), and an appropriate amount of N-methyl-2-pyrrolidone (NMP) were mixed, thereby preparing a first positive electrode slurry.

98 parts by mass of the positive electrode active material in which the second positive electrode active material particles and the third positive electrode active material particles were mixed at a mass ratio of 7:3 was mixed with 1 part by mass of acetylene black (AB), 1 part by mass of polyvinylidene fluoride (PVDF), and an appropriate amount of NMP, thereby preparing a second positive electrode slurry.

The first positive electrode slurry was applied to a surface of an aluminum foil as the positive electrode current collector, and the film was dried. Thereafter, the second positive electrode slurry was applied so as to cover the film of the first positive electrode slurry, and the film was dried. Thereafter, the film was dried and rolled, thereby forming a positive electrode mixture layer with a thickness of 100 µm on the aluminum foil. In the positive electrode mixture layer, the thickness of the first layer including the first positive electrode active material particles and the thickness of the second layer including the second and the third positive electrode active material particles were adjusted so that a ratio of a total of the mass of the second positive electrode active material particles and the third positive electrode active material particles : first positive electrode active material particles = 8:2.

Using a cross section polisher (CP), cross sections in the thickness direction of the positive electrode mixture layer and the positive electrode current collector were obtained by cutting them together, and SEM images of the cross sections were captured by the above described method, and the maximum diameter of the first, second, and third positive electrode active material particles (maximum value of equivalent circle diameter) were determined. As a result, L, R, and r determined as the maximum value of the equivalent circle diameter substantially coincided with L, R, and r determined as the D80 diameter in the volume-based particle size distribution.

The positive electrode was cut into a predetermined shape to obtain a positive electrode for evaluation. The positive electrode had a region of 20 mm × 20 mm that works as the positive electrode, and a connection region of 5 mm × 5 mm for connection with a tab lead. Thereafter, the positive electrode mixture layer formed on the above-described connecting region was scraped to expose the positive electrode current collector. Afterwards, the exposed portion of the positive electrode current collector was connected to the positive electrode tab lead and a predetermined region of the outer periphery of the positive electrode tab lead was covered with an insulating tab film.

### [Negative Electrode Production]

A negative electrode was produced by attaching a lithium metal foil (thickness 300 µm) on one side of an electrolytic copper foil as the negative electrode current collector.

The negative electrode was cut into the same form as the positive electrode, and a negative electrode for evaluation was obtained. The lithium metal foil formed on the connecting region formed in the same manner as the positive electrode was peeled off to expose the negative electrode current collector. Afterwards, the exposed portion of the negative electrode current collector was connected to the negative electrode tab lead in the same manner as the positive electrode, and a predetermined region of the outer periphery of the negative electrode tab lead was covered with an insulating tab film.

### [Electrolyte Preparation]

To a solvent mixture including ethylene carbonate (EC), ethyl methyl carbonate (EMC), and dimethyl carbonate (DMC) at a volume ratio of 20:5:75, LiPF₆ was added as a lithium salt, thereby preparing an electrolyte. The concentration of LiPF₆ in the electrolyte was set to 1.3 mol/liter.

### [Secondary Battery Production]

A battery for evaluation was produced using the positive electrode and negative electrode for evaluation. First, the positive electrode and negative electrode were allowed to face each other with a separator interposed therebetween so that the positive electrode mixture layer overlapped with the negative electrode mixture layer, thereby producing an electrode group. Next, an Al laminate film (thickness 100 µm) cut into a size of 60 × 90 mm rectangle was folded into half, and the long side end of 60 mm was heat sealed at 230°C, to make it into an envelope of 60 × 45 mm. Afterwards, the produced electrode group was put into the envelope, and the end face of the Al laminate film and the position of the insulating tab film of the tab lead were aligned and heat sealed at 230°C. Next, 0.3 cm³ of the nonaqueous electrolyte was injected from the not heat-sealed portion of the short side of the Al laminate film, and after the injection, they were allowed to stand for 5 minutes under a reduced pressure of 0.06 MPa to impregnate the electrode mixture layers with the electrolyte. Lastly, the end face of the injected side of the Al laminate film was heat sealed at 230°C, thereby producing a battery A1 for evaluation. The evaluation cell was prepared in a dry air atmosphere having a dew point of -50°C or less.

### <Comparative Example 1>

In the positive electrode production, only the second positive electrode slurry of Example 1 was applied on a surface of an aluminum foil as the positive electrode current collector. Except for this, a positive electrode having the same theoretical capacity as that in Example 1, and having the positive electrode mixture layer with a thickness of 100 µm was produced. Using this positive electrode, a battery B1 for evaluation was produced in the same manner as in Example 1.

### <Comparative Example 2>

In the positive electrode production, a positive electrode slurry was prepared by mixing 98 parts by mass of a positive electrode active material, in which first to third positive electrode active material particles of Example 1 were mixed at a mass ratio of: first positive electrode active material particles : second positive electrode active material particles : third positive electrode active material particles =20:56:24, 1 part by mass of acetylene black (AB), 1 part by mass of polyvinylidene fluoride (PVDF), and an appropriate amount of NMP. Only the positive electrode slurry was applied on a surface of an aluminum foil as the positive electrode current collector. Except for this, a positive electrode having the positive electrode mixture layer with a thickness of 100 µm was produced. In this positive electrode, the positive electrode mixture layer had the same first to third positive electrode active material particle contents as the positive electrode of Example 1. However, the positive electrode mixture layer does not have the first layer and the second layer, and the first to third positive electrode active material particles are dispersed in the positive electrode mixture layer.

Using this positive electrode, a battery B2 for evaluation was produced in the same manner as in Example 1.

### [Evaluation 1: Charge-discharge curve]

The completed battery was sandwiched by a pair of 80 × 80 cm stainless steel (thickness 2 mm) clamps to be pressurized and fixed at 0.2 MPa. The batteries were charged and discharged under a 25°C environment. The charging was performed by applying a constant current at an electric current of 0.7C until the voltage reached 4.3 V, and then kept to 4.3 V until the electric current value reached 0.07C or less. The discharging was performed at a constant current of 0.15C until the battery voltage reached 2.5 V. Then, the relation of the battery voltage relative to an integral of electric current flowed (charge-discharge curve) was determined. The batteries were allowed to stand for 20 minutes between the charging and discharging, and the charging and discharging were repeated for 10 cycles under the above-described charge and discharge conditions under a 25°C environment.

### [Evaluation 2: Capacity Retention Rate]

The batteries were put under a 25°C environment, and the charging voltage was set to 4.5 V. Except for this, the same charge and discharge cycles as that of Evaluation 1 was performed.

The batteries were allowed to stand for 20 minutes between the charging and discharging, and the charging and discharging were repeated for 10 cycles under the above-described charge and discharge conditions under a 25°C environment. In each of the cycles, the discharge capacity Cₙ relative to the charge capacity C₀ of the 1st cycle was determined, and Cₙ/C₀ × 100 was evaluated as capacity retention rate.

FIG. 3A shows measurement results of a charge-discharge curve of the battery A1. FIG. 3B shows measurement results of a charge-discharge curve of the battery B1. In both of the battery A1 and the battery B1, there were tendencies that the voltage during charging increased and the discharge capacity decreased with repetitive charge and discharge cycles. However, in FIG. 3A, compared with FIG. 3B, the increase in the charging voltage along with repetitive charge and discharge cycles is suppressed, and polarization is reduced. As a result, reduction in the discharge capacity with repetitive charge and discharge cycles is suppressed.

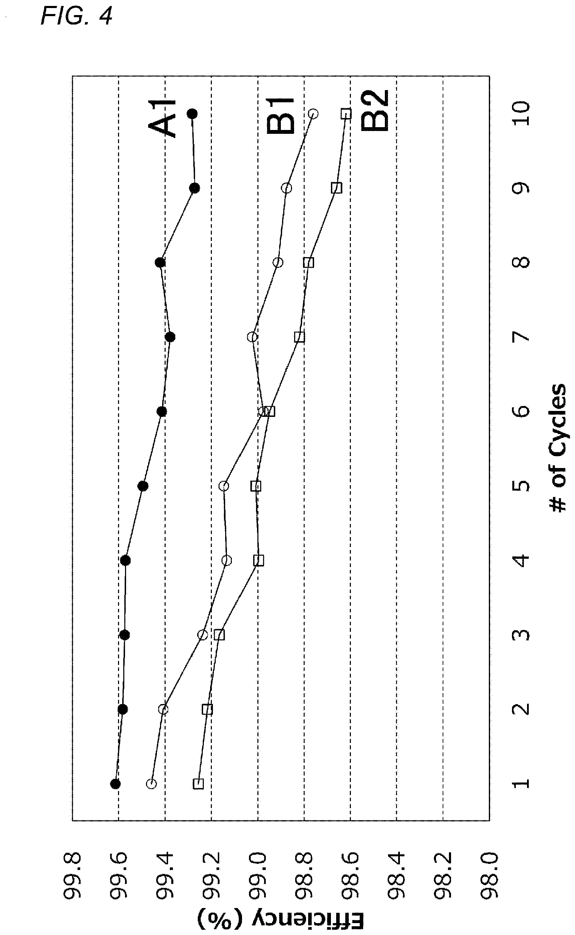

FIG. 4 shows changes in the capacity retention rate of the batteries A1, B1, and B2 for every charge and discharge cycle. In FIG. 4, in charge and discharge cycles, charging was performed at a high voltage of 4.5 V until an excessively charged state, and under the environment where Mn in the lithium-nickel-manganese composite oxide is easily eluted. However, in the battery A1, even under such high voltage charging conditions, compared with the batteries B1 and B2, the decrease in discharge capacity along with repetitive charge and discharge cycles is suppressed.

### <Examples 2 to 6, Comparative Example 3>

In the positive electrode production, the particle diameter of the first to third positive electrode active material particles was changed in accordance with Table 1.

Except for the above, batteries A2 to A6, and B3 for evaluation were made in the same manner as in Example 1, and discharge rate characteristics were evaluated by the method shown below.

### [Evaluation 3: Discharge rate characteristics]

Pairs of the same type of batteries were prepared, and put under a 25°C environment. Constant current charging was performed until the voltage reached 4.3 V at a current of 0.15C, and after the constant current charging, constant voltage charging with a constant voltage of 4.3 V was performed until the current reached 0.015C.

Afterwards, for one battery, constant current discharging was performed at a current of 1C until the voltage reached 2.5 V to obtain a discharge capacity C₁. Afterwards, for the other battery, constant current discharging was performed at a current of 0.1C until the voltage reached 2.5 V to obtain a discharge capacity C₁₀.
(C₁/C₁₀) × 100 was determined, and evaluated as discharge rate characteristics.

Table 1 shows the evaluation results of discharge rate characteristics of the batteries A1 to A6, and B3, along with the particle diameter of the first to third positive electrode active material particles. In the batteries A1 to A5, where R > L > r and r > 0.155L are satisfied, discharge rate characteristics were kept high.

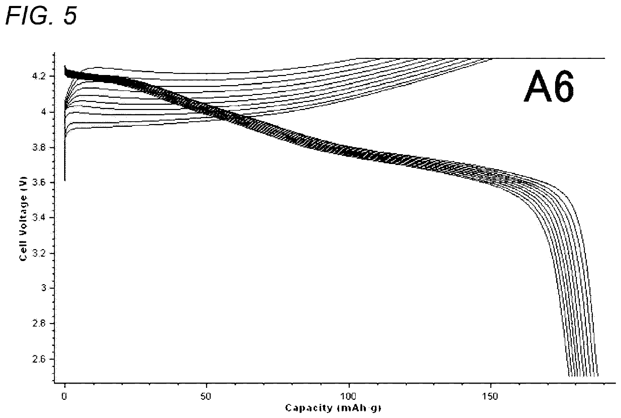

The charge-discharge curve of the battery A6 is shown in FIG. 5. The battery A6 satisfied R > L > r, and therefore, increase in charging voltage with repetitive charge and discharge cycles was suppressed, and decrease in discharge capacity along with repetitive charge and discharge cycles was suppressed, although they were inferior compared with the battery A1. However, because r > 0.155L is not satisfied, discharge rate characteristics are reduced compared with the batteries A1 to A5.

The battery B3 does not satisfy R > L > r and therefore increase in the charging voltage and decrease in discharge capacity along with repetitive charge and discharge cycles were not suppressed, and discharge rate characteristics decreased more than the batteries A1 to A6.

**Table 1]**

| Battery | First positive electrode active material particle diameter L/[µm] | Second positive electrode active material particle diameter R/[µm] | Third positive electrode active material particle diameter r/[µm] | 1C/0.1C discharge rate characteristics |
|---|---|---|---|---|
| A1 | 6 | 15 | 1 | 97 |
| A2 | 3 | 10 | 1 | 98 |
| A3 | 6 | 10 | 5 | 97 |
| A4 | 12 | 20 | 5 | 96 |
| A5 | 17 | 25 | 5 | 95 |
| A6 | 12 | 30 | 1 | 92 |
| B3 | 17 | 10 | 5 | 88 |

### [Industrial Applicability]

With the secondary battery of the present disclosure, a secondary battery that has a high capacity and that is also advantageous for improving charge and discharge characteristics can be provided. The secondary battery of the present disclosure is useful for a main power source for mobile communication devices, electric vehicles, hybrid vehicles, and mobile electronic devices.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug, 10: positive electrode, 11: positive electrode current collector, 12: positive electrode mixture layer, 12A: first layer, 12B: second layer, P1: first positive electrode active material particles, P2: second positive electrode active material particles, P3: third positive electrode active material particles

## Claims

1. A positive electrode for a secondary battery comprising: a positive electrode current collector, and a positive electrode mixture layer provided on a surface of the positive electrode current collector, wherein
the positive electrode current collector includes Al,
the positive electrode mixture layer includes a first layer making contact with the positive electrode current collector and a second layer making contact with the first layer,
the first layer includes first positive electrode active material particles with a particle diameter L,
the second layer includes second positive electrode active material particles with a particle diameter R,
third positive electrode active material particles with a particle diameter r are included at at least an interface between the first layer and the second layer,
the first positive electrode active material particles include a first lithium transition metal composite oxide, and a ratio of Co in metal element atoms other than Li included in the first lithium transition metal composite oxide is 2 atom% or more,
the second positive electrode active material particles include a second lithium transition metal composite oxide, and the second lithium transition metal composite oxide does not include Co, or a ratio of Co in metal element atoms other than Li included in the second lithium transition metal composite oxide is less than 2 atom%,
the third positive electrode active material particles include a third lithium transition metal composite oxide, and the third lithium transition metal composite oxide does not include Co, or a ratio of Co in metal element atoms other than Li included in the third lithium transition metal composite oxide is less than 2 atom%, and
R > L > r is satisfied.

2. The positive electrode for a secondary battery of claim 1, wherein r > 0.155L is satisfied.

3. The positive electrode for a secondary battery of claim 1 or 2, wherein the particle diameter R of the second positive electrode active material particles is in a range of 10 to 30 µm, and
the particle diameter r of the third positive electrode active material particles is in a range of 1 to 5 µm.

4. The positive electrode for a secondary battery of any one of claims 1 to 3, wherein the third positive electrode active material particles are not present at an interface between the positive electrode current collector and the first layer.

5. The positive electrode for a secondary battery of any one of claims 1 to 4, wherein the second layer includes the third positive electrode active material particles.

6. The positive electrode for a secondary battery of any one of claims 1 to 5, wherein the first lithium transition metal composite oxide includes Ni, Co, and Al.

7. The positive electrode for a secondary battery of claim 6, wherein the first lithium transition metal composite oxide is a lithium-nickel-cobalt-aluminum composite oxide represented by Li_{α}Ni_{1-x-y}CoₓAl_{y}O₂ (where 0.95 ≤ α ≤ 1.05, 0.02 ≤ x ≤ 0.1, and 0.02 < x + y < 1).

8. The positive electrode for a secondary battery of any one of claims 1 to 6, wherein the second lithium transition metal composite oxide and the third lithium transition metal composite oxide each include a lithium-nickel-manganese composite oxide including Ni and Mn, in which a ratio of total of Ni and Mn in metal element atoms other than Li is 98 atom% or more.

9. The positive electrode for a secondary battery of claim 8, wherein the lithium-nickel-manganese composite oxide is represented by Li_{α}Ni₁₋ₓMnₓO₂ (where 0.95 ≤ α ≤ 1.05, and 0 < x ≤ 0.2).

10. A secondary battery comprising: the positive electrode for a secondary battery of any one of claims 1 to 9,
a separator, a negative electrode facing the positive electrode for a secondary battery with the separator interposed therebetween, and an electrolyte.
